(19) Europäisches Patentamt
European Patent Office
Office européen des brevets

(11) Veröffentlichungsnummer: **0 277 593 B1**

(12) **EUROPÄISCHE PATENTSCHRIFT**

(45) Veröffentlichungstag der Patentschrift: **21.07.93**

(51) Int. Cl.$^5$: **C08F 8/44**

(21) Anmeldenummer: **88101218.1**

(22) Anmeldetag: **28.01.88**

# (54) Photoabbaubare Polymer-Formmassen.

(30) Priorität: **02.02.87 IT 1922987**

(43) Veröffentlichungstag der Anmeldung:
**10.08.88 Patentblatt 88/32**

(45) Bekanntmachung des Hinweises auf die Patenterteilung:
**21.07.93 Patentblatt 93/29**

(84) Benannte Vertragsstaaten:
**BE DE ES FR GB NL**

(56) Entgegenhaltungen:
**DE-A- 2 201 862**
**FR-A- 1 343 030**
**US-A- 3 458 462**
**US-A- 4 038 227**

(73) Patentinhaber: **HOECHST ITALIA S.p.A.**
**Via M.U. Traiano 18**
**I-20100 Milano(IT)**

(72) Erfinder: **Jurlaro, Riccardo**
**2 Via Gaio Sertorio**
**I-20052 Monza(IT)**

(74) Vertreter: **Beck, Bernhard et al**
**HOECHST AKTIENGESELLSCHAFT Zentrale Patentabteilung Postfach 80 03 20**
**W-6230 Frankfurt/Main 80 (DE)**

EP 0 277 593 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine photoabbaubare Polymer-Formmasse, welche ein photoaktivierendes Additiv auf Basis eines Salzes eines oxidierten Polyethylenwachses enthält, und ihre Verwendung bei der Herstellung von Artikeln für den Verpackungs- und den landwirtschaftlichen Bereich.

Der Kunststoffverbrauch im Verpackungsbereich und in der Landwirtschaft ist im Lauf der Jahre ständig gewachsen und hat zu erheblichen Entsorgungsproblemen geführt. Anfänglich neigte man dazu, dieses Material immer beständiger und widerstandsfähiger gegen verschiedene mechanische Belastungen sowie gegen die Wirkung von Wärme, Licht oder anderen Witterungseinflüssen zu machen; von den 70er Jahren an hat sich dagegen das Bedürfnis abgezeichnet, dafür zu sorgen, daß der Kunststoff nach Erfüllung seiner Aufgabe abbaubar ist, wobei er aber gleichzeitig während des Gebrauchs beständig bleiben sollte.

In England, Kanada, Israel und anderen Ländern wurde dann der zeitlich steuerbare Abbau von Polyethylenfolien entwickelt. Dieses Prinzip wird erfolgreich in der Landwirtschaft genutzt, um den Schutz der Kulturen durch LDPE-Folien, die sich danach auflösen müssen, zu sichern (unter der Bezeichnung "photoabbaubare Landwirtschaftsfolien" bekannte Technik).

Unter Abbau versteht man bekanntlich die Gesamtheit der Vorgänge, die zu einer Veränderung der physikalischen und chemischen Eigenschaften führen, wobei die wichtigsten Faktoren das Molekulargewicht und der chemische Abbau des Polymers sind. Physikalische Einflüsse, wie mechanische Beanspruchungen, Licht, Wärme, Strahlungen mit hohem Energiegehalt oder chemische Einflüsse wie Wasser, Basen, Säuren, Sauerstoff, Ozon, verunreinigende Gase können zu einer fortschreitenden Veschlechterung der Materialeigenschaften führen. In diesem Zusammenhang wird in der Literatur der Unterschied zwischen temperatur- und lichtabhängigem Abbau nur prinzipiell angegeben oder wird erklärt, wenn man das Vorwiegen einer dieser Abbauarten angeben will.

Es ist auch bekannt, daß chemische Verbindungen oder Moleküle eines Polymers photochemisch reaktionsfähig sind, wenn sie ein Lichtquant absorbieren können. Verantwortlich für die Erscheinungen des photochemischen Abbaus sind die kurzwelligen Ultraviolettstrahlen (290 bis 400 nm) des Sonnenlichts. Ein Polyethylen ohne Verunreinigungen besitzt zum Beispiel eine beachtliche UV-Beständigkeit, wenn es sich in geschützter Umgebung befindet. Das ist dadurch begründet, daß seine Moleküle keine funktionellen Gruppen enthalten, die empfindlich gegen den Angriff solcher Strahlen sind. Wenn das Polyethylen - wie es bei allen Handelsmarken der Fall ist - Spuren von metallischen Verunreinigungen, Carbonylgruppen, Doppelbindungen, Spuren von aromatischen Verbindungen, Hydroperoxide und tertiäre Kohlenstoffatome enthält, besitzt es bei gleichen Umweltbedingungen eine geringere UV-Beständigkeit. Sobald es im Freien der kombinierten Wirkung des Sonnenlichts und der übrigen Witterungseinflüsse, unter denen der Sauerstoff vorherrscht, ausgesetzt wird, ist seine Beständigkeit - nicht nur gegen die UV-Strahlen - noch geringer.

Wenn daher die Gebrauchsbedingungen die Einwirkung des Sonnenlichts und somit den Einsatz im Freien vorsehen, erfordern Artikel aus Polyolefinkunststoffen (Industriesäcke, landwirtschaftliche Folien, Teppiche usw.) eine zusätzliche Stabilisierung, die im allgemeinen der Verarbeiter durch Additive in Form von Masterbatches vornimmt.

Im gegenteiligen Fall, in dem bei einem Erzeugnis eine beschränkte, programmierte Lebensdauer erwünscht ist, können dem handelsüblichen Polymer photoaktivierende Additive zugesetzt werden, d.h. Wirkstoffe, die wie die beschriebenen Verunreinigungen die Eigenschaft besitzen, Strahlen im Ultraviolettbereich zu absorbieren und die Mechanismen des photooxidativen Abbaus auszulösen und zu beschleunigen.

Die vom Kunststoff absorbierte Energie zerstört schwache Bindungen wie N-N, O-O; je nach dem den Wellenlängen entsprechenden Energienieveau werden dann die stärkeren Bindungen angegriffen und photochemische Reaktionen ausgelöst.

Die Fähigkeit, Energie in Form von UV-Strahlen zu absorbieren, hängt auch vom morphologischen Aufbau des Polymers ab. Sie ist um so höher, je weniger die kristalline Komponente gegenüber der amorphen vorherrscht. In der letzteren ist die Lichtdiffusion stärker.

Um den Photoabbau zu erklären, der durch Carbonylgruppen verursacht wird, die entweder als Verunreinigungen im Polymer vorhanden sind oder darin durch photoaktivierende Additive auf Ketonbasis (vorzugsweise in Form eines Masterbatch vordispergiert) eingebracht werden, wurden unter dem Namen Norrish bekannte Mechanismen vorgestellt, die Spaltungen der Polymerkette, Beseitigung von CO und Vernetzungen beschreiben.

Aufgrund der vorangehenden Beschreibung liegt es auf der Hand, daß es nicht an Anstrengungen gefehlt hat, geeignete Additive für Polymer-Formmassen zu finden, die imstande sind, den gewünschten Abbauprozeß von Kunststoffen zu beschleunigen und/oder zu erleichtern.

In der DE-A 22 42 275 werden z.B. Kunststoff-Formmassen, insbesondere Polyolefin-Formmassen, beschrieben, die als photoaktivierende Additive Benzophenon-Derivate enthalten, die mit einem unter Eisen,

Kobalt, Nickel, Mangan, Chrom, Zink, Calcium, Barium, Aluminium und Kupfer gewählten Metall ein Salz bilden.

Der Einsatz von Benzophenon-Derivaten als photoaktivierende Kunststoffadditive ist auch in zahlreichen anderen Veröffentlichungen beschrieben (siehe z.B. Benzophenonecatalyzed photodegradation of polypropylene film, Polymer Letters Edition, Band 15, S. 435-437, 1977; The effect of various additives on the photodegradation of polyurethanes, Polymer Letters Edition, Band 17, S. 409-413, 1979).

In der US-PS 4,038,227 werden photoabbaubare Polyolefine beschrieben, die als photoaktivierendes Additiv ein aromatisches Keton, Eisen(III)-Stearat und ein Pigment enthalten.

In der japanischen Patentanmeldung Nr. 74/22446 wird der Einsatz von Polyethylenwachsen als photoaktivierende Additive für Polyolefin-Formmassen beschrieben. Dabei handelt es sich um Verbindungen mit "einem durchschnittlichen Molekulargewicht von 450 und mit 30 Doppelbindungen/100 Kohlenstoffatome". In der Druckschrift wird gesagt, daß eine 1 mm dicke Folie spröde wird nach 100 Stunden Verweilzeit in einem Gerät mit Kohlenbogenlampe für beschleunigte Alterungsversuche.

Da also festgestellt und bewiesen worden ist, daß die Anwesenheit von Carbonyl-, Carboxyl-, Ester- und Hydroxylgruppen und auch von metallorganischen Verbindungen in Polymeren deren Abbauprozeß erleichtert, wurden neue photoaktivierende Additive geschaffen, die den Abbauprozeß der Kunststoffe gegenüber dem mit bereits bekannten und der gleichen Polymerfamilie angehörigen Produkten Erreichbaren verbessern sollten.

Bekannt ist ein Verfahren zur Herstellung von wachsartigen Verseifungsprodukten luftoxidierter 20 bis 90 Gew.-% Dicarbonsäuren enthaltender Polyethylene, bei welchem man die Polyethylenoxidate in der Schmelze bei einer Temperatur bis 160 °C mit 1- bis 3-wertigen Metallionen teilweise oder vollständig verseift (DE-A 22 01 862). Als Metalle werden die der ersten, zweiten und dritten Gruppe des Periodensystems bevorzugt. Die Produkte eignen sich insbesondere für den Einsatz auf dem Putzmittelgebiet, beispielsweise zur Herstellung von Bohnermassen, Schuhcremes, Polituren und Emulsionen, sowie ferner als Hilfsmittel bei der Kunststoffverarbeitung.

Überraschenderweise wurde herausgefunden, daß ein Kunststofferzeugnis beim Einsatz von oxidierten und mit einem geeigneten Metall zum Salz umgesetzten Wachsen auf Basis von Polyethylen als photoaktivierendes Additiv bei gleicher UV-Bestrahlung, aber bei geringerer Konzentration des Additivs viel schneller abgebaut wird als ein ähnlicher Artikel, der kein oder ein aus der Literatur bekanntes Additiv enthält.

Die Polyethylenwachse sind durch Polymerisation gewonnene Syntheseprodukte. Je nach dem Herstellverfahren sind sie durch einen linearen oder teilweise verzweigten Aufbau gekennzeichnet. Durch Oxidation entstehen daraus die eben als "oxidiert" bezeichneten homologen Polyethylenwachse, die vorwiegend funktionelle Carboxyl- und in geringerer Anzahl Carbonyl-, Ester- und Hydroxylgruppen enthalten. Die oxidierten Polyethylenwachse können schematisch wie folgt dargestellt werden:

$$HOOC-\left[-CH_2-CH_2-CH_2-CH_2-\right]_n-COOH$$

$$-\left[-CH_2-CH_2-CH_2-CH_2-\right]_n-COOH$$

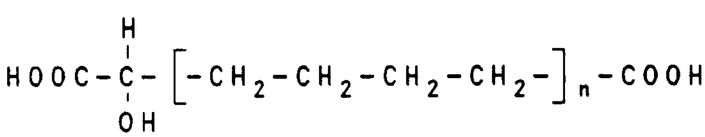

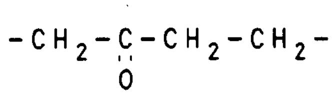

Das durchschnittliche Molekulargewicht der oxidierten Polyethylenwachse kann bei den weitestverbreiteten Typen zwischen ca. 1 000 und 3000 liegen, aber es sind auch höhere Werte möglich. Die Molekülstruktur ist mindestens aus ca. 100 Atomen aufgebaut. Wie im allgemeinen alle Wachse sind die oxidierten Polyethylenwachse nicht in Wasser löslich und unter normalen Bedingungen chemisch träge. Aufgrund der Anwesenheit von Carboxylgruppen ist eine Salzbildung logischerweise möglich, wobei Reaktionen zur Anwendung kommen, die im folgenden beschrieben werden.

Diese Wachse weisen überdies keine Toxizität gegenüber Fischen und Bakterien auf. Bei den in dieser Erfindung verwendeten oxidierten und nicht oxidierten Wachsen zum Beispiel beträgt die akute orale

Toxizität ($LD_{50}$) bei Ratten > 15 g/kg Körpergewicht.

Die vorliegende Erfindung betrifft also eine photoabbaubare Polymer-Formmasse, die aus einem thermoplastischen Polymer und aus 0,1 bis 2,0 Gew.-%, bezogen auf das Gewicht der Formmasse, eines photoaktivierenden Additivs bestehend aus einem Salz eines oxidierten Polyethylenwachses mit einer der folgenden Strukturen

$$HOOC-\left[-CH_2-CH_2-CH_2-CH_2-\right]_n-COOH$$

$$-\left[-CH_2-CH_2-CH_2-CH_2-\right]_n-COOH$$

$$HOOC-\underset{\underset{OH}{|}}{\overset{\overset{H}{|}}{C}}-\left[-CH_2-CH_2-CH_2-CH_2-\right]_n-COOH$$

$$-CH_2-\underset{\underset{O}{\|}}{C}-CH_2-CH_2-$$

Die vorliegende Erfindung betrifft auch die Verwendung thermoplastischer Polymere, in denen diese salzartigen Wachse als photoaktivierende Additive enthalten sind, zur Herstellung von Artikeln für den Verpackungssektor und für den Bereich aller landwirtschaftlichen Techniken, bei denen ein vorgegebener oder zeitlich steuerbarer Abbau des Kunststofferzeugnisses gefordert wird.

Unter thermoplastischen Polymeren im Sinne der vorliegenden Erfindung versteht man Polymere, Copolymere oder physikalische Mischungen aus LDPE, HDPE, EVA, LLDPE, PP, PS, ABS, PVC, PVAC, PMMA. Die in abzubauenden PolymerFormmassen erfolgreich als photoaktivierende Additive eingesetzten Wachse sind oxidierte Polyethylenwachse mit einem Molekulargewicht von 1 500 an aufwärts und einer Säurezahl von 10 an aufwärts, zum Beispiel die Hoechst-Wachstypen PED 521, PED 522, PED 136 usw..

Da die bei der vorliegenden Erfindung verwendeten Wachse auf Basis von Polyethylen oxidiert sind, unterscheiden sie sich von den in der JP-OS 74/22446 vorgesehenen Wachse durch die Anwesenheit von Carboxyl- und/oder Hydroxyl-und/oder Ester- und/oder Carbonylgruppen sowie durch eine größere Anzahl von Kohlenstoffatomen. Die von der erwähnten japanischen Patentanmeldung vorgeschlagenen Wachse können außerdem auf keinen Fall salzartig sein, denn nach der Druckschrift sind sie nicht besonders oxidiert und enthalten daher keine Carboxylgruppen, was jedoch die erste Voraussetzung für ihre eventuelle Salzbildung ist.

Die Metalle, die (in Form von organischen oder anorganischen Salzen) zur Salzbildung der oxidierten Wachse auf Basis von Polyethylen nach der vorliegenden Erfindung verwendet werden, sind Eisen und/oder Kupfer.

Die in der abzubauenden Polymer-Formmasse vorhandene Menge des photoaktivierenden Additivs (als Wirkstoff gerechnet) liegt zwischen 0,1 und 2 Gew.-%, bezogen auf das Gewicht der verwendeten Formmasse, vorzugsweise aber zwischen 0,5 und 1,50 Gew.-%. Um das Salz des oxidierten Wachses zuzubereiten, wird eine im allgemeinen im Verhältnis 1:2,5 angesetzte Mischung aus Wachs und entsalztem Wasser (E-Wasser) in einen Autoklaven gefüllt. Dann fügt man eine Base, vorzugsweise in einem Teil des E-Wassers gelöstes Natriumhydroxid, hinzu und erwärmt für ca. 40 - 60 Minuten unter Rühren auf 120 - 150 °C, vorzugsweise auf 130 °C unter Druck. Danach wird abgekühlt, E-Wasser eingefüllt und dann langsam die Lösung des gewünschten Salzes in einem geeigneten Lösemittel zugegeben. Das Metallsalz des Wachses, das als feinstes Pulver ausfällt, wird bis zur Erreichung eines pH-Wertes von 6,5 mit Wasser gespült und dann bis zu einem Feuchtigkeitsgehalt unter 0,2 % vakuumgetrocknet.

Wahlweise kann man auch zuerst das Wachs schmelzen und dann mit einer geeigneten Lösung des gewünschten Metallsalzes langsam umsetzen. Als Lösemittel sollte dabei Wasser oder ein Glykolether verwendet werden, je nachdem, ob der Schmelzpunkt des Wachses unter oder über 100 °C liegt. Nach erfolgter Reaktion wird das Salz des Wachses in besonderen Formen abgekühlt und dann in einer Mühle gemahlen; das dabei entstehende Pulver wird mehrmals mit E-Wasser gespült, bis es einen pH-Wert von 6,5 aufweist.

Die zuvor und in den Beispielen verwendeten Kurzzeichen haben folgende Bedeutungen:

LPDE = Hochdruckpolyethylen

| | |
|---|---|
| HDPE = | Niederdruckpolyethylen |
| EVA = | Ethylenvinylacetat |
| LLDPE = | lineares Polyethylen niedriger Dichte |
| PP = | Polypropylen |
| PS = | Polystyrol |
| ABS = | Acrylnitril-Butadien-Styrol |
| PVC = | Polyvinylchlorid |
| PVAC = | Polyvinylacetat |
| PMMA = | Polymethylmethacrylat |

Das folgende Beispiel dient zur besseren Veranschaulichung der Erfindung.

Beispiel

Zubereitung des Metallsalzes des oxidierten Polyethylenwachses

Methode a)

In einem Autoklaven mit mechanischem Rührer wurde eine Mischung gegeben, die aus Wachs (Hoechst-Wachs PED 522, Molekulargewicht ca. 2000, Tropfpunkt ca. 103 °C, Säurezahl ca. 25, Verseifungszahl ca. 50, oder Hoechst-Wachs PED 136, Molekulargewicht ca. 3000, Tropfpunkt ca. 110 °C, Säurezahl ca. 62, Verseifungszahl ca. 100) und E-Wasser im Verhältnis von 30 Teilen Wachs zu 70 Teilen Wasser bestand. Danach wurde eine stöchiometrisch ausreichende Menge von zuvor in einem geringen Teil des oben verwendeten E-Wassers aufgelöstem Natriumhydroxid zur Neutralisierung der Säurezahl des Wachses (im vorliegenden Fall 20 bzw. 66) hinzugegeben. Unter Rühren wurde dann für eine Zeit von ca. 1 Stunde auf 130 °C unter einem Druck von 3 atm erwärmt. Danach kühlte man auf 40 °C ab, gab E-Wasser bei 40 - 50 °C hinzu, um die entstandene ionogene Emulsion auf 10 % Trockengehalt zu bringen, und dann gab man unter Rühren langsam fadenförmig eine 10 %ige Lösung von $FeCl_3 \cdot 6H_2O$ in Wasser oder in Glykolether hinzu. Es fand ein Kationenaustausch unter Ausfällung des Eisen(III)-Salzes in Form eines sehr feinen Pulvers statt. Das Pulver wurde bis zur Erreichung eines pH-Wertes von 6,5 mit Wasser gewaschen, um das überschüssige Eisen(III)-Chlorid und Spuren von freiem Chlorwasserstoff zu beseitigen. Dann wurde es bei einer Temperatur unter 60 °C bis auf einen Feuchtigkeitsgehalt < 0,2 % vakuumgetrocknet.
Der Erstarrungspunkt wurde am rotierenden Thermometer ermittelt (Methode DGF - M - III 4a63).
Grundwachs: 107 °C
Säurezahl: 65 (DGF - M - IV 2 57)
Erstarrungspunkt des Salzes: 135 °C.

Methode b)

In einem offenen Reaktor mit Rührer wurde Hoechst-Wachs PED 136 bei 140 °C geschmolzen.

Nach erfolgtem Schmelzen gab man langsam, zuerst tropfenweise und dann in einem dünnen Faden, stöchiometrische Mengen einer zuvor auf 80 °C erwärmten 40 %igen Lösung von $FeCl_3 \cdot 6H_2O$ oder $CuCl_2$ in Ethyldiglykol (Diethylenglykolmonoethylether oder ein anderer Glykolether) hinzu. War eine doppelte Salzbildung erwünscht, so wurde zuerst die Eisensalz- und dann die Kupfersalzlösung hinzugegeben. Es sind viele Salzverhältnisse des sauren Wachses möglich, vorausgesetzt, daß die stöchiometrischen Prinzipien beachtet werden. Zum Beispiel wurde ein gemischtes Eisen-Kupfer-Salz mit Hoechst-Wachs PED 136 zubereitet, dessen Säurezahl 66 zu 70 % (= 46,5) der 40 %igen $FeCl_3 \cdot 6H_2O$-Lösung und zu 30 % (= 19,8) der 40 %igen $CuCl_2$-Lösung, natürlich in den entsprechenden stöchiometrischen Mengen, zugeschrieben worden ist.

Bei Schaumbildung (die durch die sich entwickelnden HCl-Dämpfe verursacht wird) wurde die Salzbildung jedesmal unterbrochen und danach sofort wieder aufgenommen. Am Anfang erhöhte sich die Schmelzentemperatur exotherm, was ein deutliches Zeichen der Salzbildung ist.

Der Effekt ist weniger auffällig mit $CuCl_2$ im Fall des gemischten Eisen/Kupfer-Salzes. Während der Salzbildung darf die Schmelztemperatur nicht unter 125 °C sinken.

Nach beendeter Reaktion wurde die Schmelze in Formen geleert und abgekühlt. Die feste Masse wurde in einer Mühle gemahlen und das dabei entstehende Pulver mehrmals mit E-Wasser gewaschen, bis kein Chlor mehr vorhanden und ein pH-Wert von 6 - 6,5 erreicht war. Auch in diesem Fall darf der Feuchtigkeitsgehalt nicht über 0,2 % liegen, daher wurde das Pulver bei ca. 60 °C vakuumgetrocknet.

Der Erstarrungspunkt wurde wie bei der Methode a) beschrieben ermittelt.

Erstarrungspunkt des Fe-Cu-Salzes (70 : 30) = 130 ° C.

Photoabbaubarkeitsversuche

Das photoaktivierende Additiv besteht aus einem oxidierten Polyethylenwachs mit einem durchschnittlichen Molekulargewicht von 2 000 - 3 000 und einer Säurezahl zwischen 20 und 70 (Methode DGF-M-IV 2 57), das mit Eisen und/oder Kupfer in unterschiedlichem Verhältnis in Einklang mit den stöchiometrischen Prinzipien verbunden ist.

Für dieses besondere Beispiel wurde ein mit Eisen(III) umgesetztes oxidiertes Polyethylenwachs gewählt. Das gewonnene Eisen(III)-Salz wurde dann in einer Konzentration von 15 % in LDPE mit einem Schmelzindex 190/2.16 = 7 g/10 min eingearbeitet und ein Masterbatch gebildet.

Es wurden 50 und 100 µm dicke Folien aus LDPE (Schmelzindex 190/2.16 = 2 g/10 min, enthaltend 4 bzw. 7 % Masterbatch entsprechend 0,6 % bzw. 1,05 % des photoaktivierenden Additivs) extrudiert. Danach wurden die Folien in einem Gerät für beschleunigte Alterungsversuche, Marke Q-U-V der Fa. The-Q-Panel Company, USA, einer UV-Bestrahlung mit folgendem Zyklus ausgesetzt: 8 Stunden Bestrahlung bei 60 ° C,

4 Stunden im Dunkeln mit Kondenswasser bei 40 ° C, Gesamtzeit 48 Stunden.

Die Proben wurden auf a) relative prozentuale Dehnung und b) auf die Carbonylzahl (Verhältnis zwischen den Absorptionen bei 1730 $cm^{-1}$ und 720 $cm^{-1}$ geprüft. Die Ergebnisse sind in der nachstehenden Tabelle angegeben.

**Tabelle: Instrumentelle Belichtung. Prüfung der mechanischen und optischen Eigenschaften**

| Folie | Bestrahlung h | Dicke in µm | Konzentration % Additiv | Dehnung % | Carbonylzahl |
|---|---|---|---|---|---|
| Blindprobe | 0 | 50 | - | 220 | 0,01 |
| " | 48 | 50 | - | 175 | 0,02 |
| " | 0 | 100 | - | 500 | 0,01 |
| " | 48 | 100 | - | 420 | 0,01 |
| mit Additiv | 48 | 50 | 0,60 | 35 | 0,16 |
| mit Additiv | 48 | 100 | 0,60 | 40 | 0,26 |
| mit Additiv | 48 | 50 | 1,05 | 21 | 0,26 |

Die Ergebnisse der instrumentellen Versuche wurden durch die bei der Belichtung im Freien erreichten Werte bestätigt. Die Proben, die aus den gleichen Rollen wie die für die instrumentellen Prüfungen verwendeten Folien entnommen worden waren, wurden auf einem Holzrahmen in einem Winkel von 45 ° gegen den Horizont in südlicher Richtung angeordnet.

Die Belichtung fand in Lomagna (Como) statt. Nach fünf Wochen waren die das Additiv enthaltenden Folien ziemlich spröde geworden. Nach weiteren zwanzig (20) Tagen waren die Folien vollständig versprödet, wogegen die Vergleichsmuster noch unversehrt waren.

**Patentansprüche**

**1.** Photoabbaubare Polymer-Formmasse, bestehend aus einem thermoplastischen Polymer und 0,1 bis 2,0 Gew.-%, bezogen auf das Gewicht der Formmasse, eines photoaktivierenden Additivs bestehend

aus einem Salz eines oxidierten Polyethylenwachses mit einer der folgenden Strukturen

$$HOOC\text{-}[\text{-}CH_2\text{-}CH_2\text{-}CH_2\text{-}CH_2\text{-}]_n\text{-}COOH$$

$$\text{-}[\text{-}CH_2\text{-}CH_2\text{-}CH_2\text{-}CH_2\text{-}]_n\text{-}COOH$$

$$\begin{array}{l} \quad\quad H \\ \quad\quad | \\ HOOC\text{-}C\text{-}[\text{-}CH_2\text{-}CH_2\text{-}CH_2\text{-}CH_2\text{-}]_n\text{-}COOH \\ \quad\quad | \\ \quad\quad OH \end{array}$$

$$\begin{array}{l} \text{-}CH_2\text{-}C\text{-}CH_2\text{-}CH_2\text{-}\ , \\ \quad\quad \| \\ \quad\quad O \end{array}$$

einem Molekulargewicht von mindestens 1500 und einer Säurezahl von mindestens 10, wobei das Kation Eisen und/oder Kupfer ist.

2. Photoabbaubare Polymer-Formmasse nach Anspruch 1, dadurch gekennzeichnet, daß die Menge des photoaktivierenden Additivs zwischer 0,5 und 1,50 Gew.-% liegt.

3. Photoabbaubare Polymer-Formmasse nach Anspruch 1, dadurch gekennzeichnet, daß das thermoplastische Polymer ein Polymer, ein Copolymer oder eine physikalische Mischung von LDPE, HDPE, EVA, LLDPE, PP, PS, ABS, PVC, PVAC oder PMMA ist.

4. Verwendung der Polymer-Formmasse nach Anspruch 1 zur Herstellung von Artikeln für den Einsatz im Verpackungssektor und im Bereich aller landwirtschaftlichen Techniken, bei denen ein vorgegebener oder zeitlicher Abbau des Plastikartikels erwünscht ist.

## Claims

1. A photodegradable polymer molding composition comprising a thermoplastic polymer and from 0.1 to 2.0 % by weight, based on the weight of the molding composition, of a photoactivatable additive comprising a salt of an oxidized polyethylene wax having one of the following structures

$HOOC-[-CH_2-CH_2-CH_2-CH_2-]_n-COOH$

$-[-CH_2-CH_2-CH_2-CH_2-]_n-COOH$

H

|

$HOOC-C-[-CH_2-CH_2-CH_2-CH_2-]_n-COOH$

|

OH

$-CH_2-C-CH_2-CH_2-$ ,

||

O

a molecular weight of at least 1500 and an acid number of at least 10, the cation being iron and/or copper.

**2.** A photodegradable polymer molding composition as claimed in claim 1, wherein the amount of photoactivatable additive is between 0.5 and 1.50 % by weight.

**3.** A photodegradable polymer molding composition as claimed in claim 1, wherein the thermoplastic polymer is a polymer, a copolymer or a physical mixture of LDPE, HDPE, EVA, LLDPE, PP, PS, ABS, PVC, PVAC or PMMA.

**4.** The use of a polymer molding composition as claimed in claim 1 for the production of articles for use in the packaging sector and in the area of all agricultural techniques in which predefined degradation or degradation with time of the plastic article is desired.

**Revendications**

**1.** Composition de polymère photodégradable à mouler, consistant en un polymère thermoplastique et en 0,1 à 2,0 % en poids,par rapport au poids de la composition à mouler,d'un additif photoactivant consistant en un sel d'une cire de polyéthylène oxydé ayant lune des structures suivantes:

$HOOC-[-CH_2-CH_2-CH_2-CH_2-]_n-COOH$

$-[-CH_2-CH_2-CH_2-CH_2-]_n-COOH$

H

|

$HOOC-C-[-CH_2-CH_2-CH_2-CH_2-]_n-COOH$

|

OH

$-CH_2-C-CH_2-CH_2-$ ,

||

O

un poids moléculaire au moins égal à 1 500 et un indice d'acide valant au moins 10 , le cation étant le fer et/ou le cuivre.

**2.** Composition de polymère photodégradable à mouler selon la revendication 1 , caractérisée en ce que l'additif photoactivant est présent en une quantité comprise entre 0,5 et 1,5 % en poids .

**3.** Composition de polymère photodégradable à mouler selon la revendication 1 , caractérisée en ce que le polymère thermoplastique est un polymère,un copolymère ou un mélange physique de LDPE (polyéthylène basse densité), HDPE (polyéthylène haute densité),EVA (éthylène/acétate de vinyle)-,LLDPE (polyéthylène linéaire à basse densité),PP (polypropylène),PS (polystyrène),ABS (acrylonitrile,butadiène,styrène),PVC (poly(chlorure de vinyle)), PVAC (poly(acétate de vinyle)) ou PMMA (polyméthacrylate de méthyle).

**4.** Utilisation de la composition de polymère à mouler selon la revendication 1 pour fabriquer des articles à utiliser dans le secteur de l'emballage et dans le domaine de toutes les techniques agricoles , dans lesquel(le)s on souhaite une dégradation,sous une forme ou en un temps prédéterminé(e), de l'article en matière plastique .